# EUROPÄISCHE PATENTANMELDUNG

(11) **EP 0 776 108 A2**
(43) Veröffentlichungstag der Anmeldung: **28.05.1997**
(21) Anmeldenummer: 96118814.1
(22) Anmeldetag: 23.11.1996
(51) Int. Cl.: H04L 12/40, H02G 3/00

(54) **Bussystem, insbesondere zur elektrischen Installation**

(30) Priorität: 25.11.1995 DE 19544027
(71) Anmelder: Zimmermann, Bernward, 78532 Tuttlingen (DE)
(72) Erfinder: Zimmermann, Bernward, 78532 Tuttlingen (DE)
(74) Vertreter: Eisele, Eberhard, Dipl.-Ing.

(57) **Zusammenfassung**

Es wird ein Bussystem, insbesondere für die Hausinstallation vorgeschlagen, das gegenüber konventionellen Beschaltungen die Vorteile der Flexibilität eines Bussystems bietet und kostenmäßig konkurrenzfähig ist. Dies wird erfindungsgemäß dadurch erreicht, daß zwei oder mehrere Busteilnehmer (1, 2, 3, 14) zeitgleich ohne Prioritätszuweisung zugriffsberechtigt sind. Durch die bewußt in Kauf genommenen Kollisionen können die Steuermittel (11) für die einzelnen Busteilnehmer erheblich vereinfacht werden.

## Beschreibung

Die Erfindung betrifft ein Bussystem, insbesondere zur elektrischen Hausinstallation nach dem Oberbegriff des Anspruchs 1.

Bussysteme sind mittlerweile vielfach gebräuchlich geworden. Sie finden vornehmlich Anwendung in der Computertechnik sowie der Regelungs- und Steuertechnik. Bussysteme werden in den verschiedenartigsten Anwendungsbereichen dort eingesetzt, wo verschiedene elektronische oder elektrische Komponenten miteinander vernetzt werden. Auch im Bereich der elektrischen Hausinstallationen werden bereits derartige Bussysteme eingesetzt, wie beispielsweise in der EP 488 178 beschrieben.

Die anfänglich bekannten Bussysteme werden von sogenannten Buscontrollern zentral gesteuert, die die gesamte Kommunikation der Busteilnehmer untereinander überwachen und regeln ("Master-Slave Prinzip"). Weiterhin sind modernere Bussysteme in Erscheinung getreten, bei denen kein zentraler Buscontroller eingesetzt wird, sondern eine Vielzahl von Busteilnehmern mit gleicher Zugriffsberechtigung auf das Bussystem vorgesehen wurden. Bei derartigen Bussystemen spricht man daher von einem sogenannten "Multimaster"-Betrieb.

Alle bekannten Bussysteme sind mit hohem Aufwand gegen fehlerhafte Datenübertragungen gesichert. Neben einem fest vorgegebenen Datenübertragungsprotokoll ist das rigorose Einhalten von Prioritätszuweisungen unabdingbar, um gegenseitige Störungen durch unkontrollierte gleichzeitige Zugriffe von Busteilnehmern auf den Bus zu unterbinden. Auch im sogenannten "Multimaster"-Betrieb gibt es daher Prioritätszuweisungen nach vorbestimmten Regeln, sobald verschiedene Master zeitgleich auf den Bus zugreifen wollen.

Häufig sind auch nicht alle Busteilnehmer sogenannte Master, sondern es werden verschiedene Busteilnehmer in einer bestimmten Hierarchie innerhalb des Bussystems untergeordnet ("Slaves").

Um eine sichere Datenübertragung zu gewährleisten benötigen alle Busteilnehmer mit vorrangiger Priorität, d.h. entweder der zentrale Controller oder die Controller von mehreren sogenannten Mastern eine ausreichende Rechenkapazität sowie genügend Speicherplatz, damit die für einen einwandfreien Betrieb notwendige, umfangreiche Software geladen und betrieben werden kann.

Durch den oben beschriebenen Aufwand sind die bekannten Bussysteme für verschiedene Anwendungen, insbesondere für die Hausinstallation zu teuer und haben sich infolgedessen in diesen Bereichen nicht auf dem Markt durchgesetzt.

Der Erfindung liegt daher die Aufgabe zugrunde, ein Bussystem, insbesondere für die Hausinstallation zur Verfügung zu stellen, das gegenüber konventionellen Beschaltungen die Vorteile der Flexibilität eines Bussystems bietet und kostenmäßig konkurrenzfähig ist.

Diese Aufgabe wird ausgehend von einem Bussystem der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Bussystem das sowohl Busteilnehmer, die jeweils nur mit einem Sender oder Empfänger versehen sind, als auch Busteilnehmer aufweist, die mit einem Sender und einem Empfänger versehen sind, dadurch aus, daß zwei oder mehrere Busteilnehmer zeitgleich ohne Prioritätszuweisung zugriffsberechtigt sind.

Bei dieser Betriebsart kann man, im Gegensatz zu den vorgenannten Betriebsarten durchaus neu, von einem "Slave-Slave Prinzip" sprechen.

Dies bedeutet, daß Kollisionen zwischen zwei Busteilnehmern bewußt in Kauf genommen werden. Der dadurch erzielte Vorteil liegt darin, daß die Steuermittel für die einzelnen Busteilnehmer erheblich vereinfacht werden können. In besonderen Ausführungsformen kommen die Steuermittel der Busteilnehmer sogar ohne Prozessor und entsprechende Software aus, sondern können aus einfachen logischen Bausteinen aufgebaut werden.

Der Erfindung liegt die Erkenntnis zugrunde, daß für verschiedene Anwendungen, beispielsweise innerhalb von elektrischen Hausinstallationen, die üblicherweise von Bussystemen geforderte Fehlersicherheit keine praktische Relevanz besitzt. Zum einen ist die Wahrscheinlichkeit einer gleichzeitigen Aufnahme eines Signals, bzw. Betätigung von sogenannten Sensoren (d.h. Schalter, Taster, etc.), die mit dem Bus in Verbindung stehen, sehr gering. Die zugelassenen Kollisionen werden daher von vornherein extrem selten auftreten.

Zum anderen ist es im Bereich der elektrischen Hausinstallation ohne weiteres möglich, bei Fehlfunktionen den entsprechenden Sensor erneut zu betätigen. Dies ist bereits jetzt mit den vorhandenen konventionellen Schaltelementen hin und wieder notwendig.

Daher wird in einer vorteilhaften Ausführungsform auch keine automatische Korrektur- oder Wiederholroutine beim Auftreten von solchen Übertragungsfehlern durch gleichzeitigen Zugriff zweier oder mehrerer Busteilnehmer vorgesehen. Der Aufwand für die Steuermittel der Busteilnehmer reduziert sich hierdurch weiter.

In einer vorteilhaften Ausführungsform eines erfindungsgemäßen Bussystemes wird nur die Übertragung von Teilnehmeradressen und keiner sonstigen Information über den Bus vorgesehen. Durch diese Maßnahme wird der Aufwand für die Steuermittel erneut vermindert. Hierbei wird ausgenutzt, daß gerade innerhalb von Hausinstallationen die Betätigung eines Sensors, z.B. eines Schalters, in der Regel ein ganz bestimmtes Ereignis, z.B. das Schalten einer Lampe, durch einen sogenannten Aktor auslöst. Dieses Ereignis wird nunmehr durch das Absenden einer bestimmten Adresse am vorbestimmten Ort ausgelöst. Weitere Daten werden nicht benötigt und daher auch nicht für die Übertragung vorgesehen.

In einer Weiterbildung der Erfindung werden neben den Teilnehmeradressen auch Befehle über die Busleitung übermittelt. Dies ist dann von Vorteil, wenn eine freie Ablauffolge bei einem Aktor ausgelöst werden soll. So kann beispielsweise ein Rolladen durch eine Befehlsfolge "abstopp-ab-stopp-auf usw." in eine bestimmte Position gesteuert werden, sofern wenigstens ein Befehl zusätzlich zur gewünschten Teilnehmeradresse mit übermittelt wird. Derartige freie Ablauffolgen sind bei vielen elektrisch steuerbaren Hausinstallationskomponenten, wie Rolladen oder Markisen, Wind- oder Sonnenwächter, Heizungssteuerungen, Temperaturwächter, Alarmgebern, Zeitgebern etc. zur Steuerung von Vorteil.

In einer Weiterbildung der Erfindung werden die Busteilnehmer dahingehend spezifiziert, daß ihre Steuermittel entweder einen Sender oder einen Empfänger umfassen. Die Busteilnehmer, die einen Sender umfassen, sind somit Sensoren, während die Busteilnehmer mit Empfänger als Aktoren oder Verbraucher bezeichnet werden können. Die Daten werden somit immer unidirektional gesandt. Der Aufwand für die jeweiligen Steuermittel wird dadurch weiter reduziert.

Diese Aufgliederung entspricht den vorhandenen Verhältnissen innerhalb einer Hausinstallation. Schalter, Taster, Signalaufnehmer, etc. dienen als Sensoren, um entsprechende Verbraucher mit denen sie unmittelbar verdrahtet sind, zu betätigen. Somit werden in einem erfindungsgemäßen Bussystem die genannten Schalter und Taster bzw. generell alle Sensoren mit Steuermitteln versehen, die einen Sender für das Bussystem umfassen, während die Verbraucher oder Aktoren (Lampen, Steckdosen, Geräte etc.) mit Steuermitteln versehen werden, die einen Empfänger aufweisen. Jedes Steuermittel weist eine bestimmte Adresse auf. Bei Betätigung eines Sensors wird eben diese Adresse auf den Bus gegeben, und von dem Empfänger in den Steuermitteln des oder der entsprechenden Teilnehmer erkannt. Jeder betreffende Teilnehmer ist so ausgestaltet, daß er bei verifizierter Adresse eine entsprechende Aktion zeigt, beispielsweise das Umschalten einer Lampe oder eines Geräts usw..

Die Steuermittel für die Busteilnehmer werden bevorzugt so ausgebildet, daß sie in die herkömmlichen Bauelemente bei der Hausinstallation integrierbar sind. So werden beispielsweise die Steuermittel für die Sensoren so ausgestaltet, daß sie in die herkömmlichen Lichtschalterdosen jedes Hauses integrierbar sind. Die Steuermittel mit Empfänger wiederum sollten beispielsweise in die herkömmlichen und handelsüblichen Lampenfassungen, Steckdosen, Wanddosen und/oder Deckendosen integrierbar sein.

Durch diese Ausgestaltung kann ein erfindungsgemäßer Bus problemlos mit konventionellen Bauelementen kombiniert werden. Dies ist sowohl bei Neubauten als auch bei der Aufrüstung vorhandener Elektroinstallationen von Vorteil. Die Steuermittel können modulartig an jeden vorhandenen Sensor oder Aktor, je nach Bedarf, angeschlossen und eingebaut werden. Es wird kein aufwendig geschultes Personal zur Installation des Bussystems notwendig, sondern jeder Elektriker kann solche Steuermittel in die ihm bekannten Schalterdosen, Steckdosen bzw. Lampenfassungen oder dgl. einbauen.

Zur weiteren Vereinfachung des Einbaus werden die Steuermittel des Busteilnehmers vorzugsweise mit Mitteln zur Energieversorgung über die Phase des hauseigenen Stromnetzes ausgestattet. Somit wird keine eigene Energieleitung und kein eigenes zentrales oder übergeordnetes Energiemodul für die Steuermittel der Busteilnehmer benötigt. Diese können innerhalb der Wanddosen unmittelbar an das Stromnetz angeschlossen werden.

Bevorzugt wird für ein erfindungsgemäßes Bussystem wenigstens ein dreiadriges herkömmliches Stromkabel als Energie- und Busleitung vorgesehen. Damit kann auch das heute bereits konventionell verlegte Hausinstallationsnetz für die Busübertragung eingesetzt werden. In diesem Fall würde die Schutzleitung als Busleitung verwendet werden. Dies wäre ohne weiteres möglich, da das Bussignal aufgrund seines Kleinsignalverhaltens kaum eine Potentialverschiebung im Schutzleiter bewirkt. Zudem ist der Bus die meiste Zeit nicht aktiv.

Zur Realisierung dieser Ausführungsform empfiehlt es sich, einen geeigneten niederohmigen Widerstand zwischen dem Nulleiter und der Schutzerde zu installieren. Dieser Ohmsche Widerstand kann, falls vorhanden, eine Brücke zwischen Nulleiter und Erde ersetzen. Auf die Auswirkungen eines solchen Widerstandes wird weiter unten in der Beschreibung des Ausführungsbeispiels näher eingegangen. Insbesondere stellt ein solcher Widerstand gleichzeitig den für das Steuermittel zum Senden erforderlichen Abschlußwiderstand zwischen dem Nulleiter und dem als Busleitung dienenden Schutzleiter dar.

Dort wo ein zusätzlicher Schutzleiter gefordert oder vorgeschrieben ist, wird anstelle eines bisherigen dreiadrigen Kabels lediglich ein vieradriges Kabel eingezogen, das ebenfalls hinlänglich bekannt und im Handel erhältlich ist. Die zusätzliche Ader neben dem Schutzleiter, dem Nulleiter sowie der stromführenden Phase dient hierbei als Busleitung. Der Nulleiter wird vorteilhafterweise zugleich für die Stromführung von Energie- und Busleitung verwendet.

Die Installation der Steuermittel in den Schalterdosen bzw. den Lampenfassungen oder sonstigen Verbrauchern umfaßt somit lediglich den Anschluß der vier Adern des genannten Kabels, wobei für einen Elektroinstallateur lediglich die zusätzlich hinzugekommene Busleitung neu ist. Der Anschluß der Steuermittel ist somit besonders einfach und erfordert, wie bereits erwähnt, kein zusätzlich höher qualifiziertes Personal.

Vorzugsweise werden die Steuermittel der Busteilnehmer mit Mitteln zur variablen Adressierung versehen. Die Adressierung kann beispielsweise über sogenannten Jumper oder Dip-Schalter eingestellt werden. Hierdurch ergibt sich eine große Flexibilität eines Bussystems.

Zu Beginn der Installation werden die zugehörigen Adressen der entsprechenden Schalter und Verbraucher einmal fest eingestellt. Bei einer anderen gewünschten Zuordnung eines bestimmten Schalters und eines ganz bestimmten Verbrauchers, muß lediglich die entsprechende Dose geöffnet werden, um an die Steuermittel heranzukommen. Sodann wird die Adresse des gewünschten Schalters und Verbrauchers eingestellt und die Dose wieder geschlossen.

Vorzugsweise wird der Bus so geschaltet, daß die Busleitung im Ruhezustand spannungs- und stromlos ist. Hierdurch wird der Stromverbrauch des Bussystems im Ruhezustand verschwindend klein.

In einer vorteilhaften Ausbildung werden die Steuermittel lediglich über zwei Anschlußkabel an einen Sensor oder Aktor angeschlossen. Auch diese Maßnahme dient zur Vereinfachung der Installation, da bislang an Schalter bzw. Verbraucher wie Lampen etc. ebenfalls normalerweise nur zwei Anschlußkabel anzubringen waren. Jeder Monteur weiß somit sofort ohne größeres Nachlesen Bescheid, wie die Steuermittel anzuschließen sind.

Weiterhin ist von Vorteil, wenn die Steuermittel keine eigene Ablaufsteuerung enthalten, die in aller Regel durch einen Prozessor realisiert ist. Wie bereits oben angedeutet, ist es beim erfindungsgemäßen Bussystem möglich, die Steuermittel mit einfachen logischen Bausteinen aufzubauen. Diese sind erheblich kostengünstiger.

Bislang werden als Schalter, beispielsweise zum Einschalten einer Lampe, Schalter oder Sensoren verwendet, die in der Lage sind, die Leistung, d. h. die Spannung und den Strom, der zum Verbraucher geschaltet wird, zu schalten. Vorteilhafterweise werden in einem erfindungsgemäßen Bussystem Schalter bzw. Sensoren verwendet, die auf die geringe Leistungsaufnahme der Steuermittel ausgelegt sind. Es können somit Schalter bzw. Sensoren im Niedervoltbereich, z. B. Mikroschalter, eingesetzt werden, was einen deutlich reduzierten Aufwand bedeutet. Dieser Schalter oder Sensor wird zur weiteren Vereinfachung unmittelbar in das Steuermittel zum Senden integriert. Zu dieser Ausführungsform wird durch den Einbau der Steuermittel mit integriertem Schalter oder Sensor zugleich der bislang verwendete aufwendige Leistungsschalter bzw. Sensor ersetzt. Für die Realisierung einer einfachen Schalterfunktion wird lediglich eine zusätzliche Schalterwippe für die Bedienung notwendig. Der Aufwand für die Schalter und Anschlußmittel wird hierdurch weiter erheblich vermindert.

Bestimmte Hausinstallationskomponenten können die zeitgleiche Betätigung von zwei Funktionen beinhalten. So kann beispielsweise ein Windwächter zugleich auf zwei Sender wirken, oder auf einen Schalter können zwei Funktionen, die zeitgleich ausgeführt werden sollen, vereinigt werden. Bei einer derartigen, durch ein Ereignis bedingten zeitgleichen Betätigung von zwei Schaltern bzw. Sensoren kann in einer vorteilhaften Ausführungsform ohne aufwendige Zentralsteuerung eine weitgehend störungsfreie Übermittlung der Signale erzielt werden, indem die Datentelegramme zum Auslösen Ereignis zeitversetzt gesendet werden.

Die Zeitverzögerung wird hierbei bevorzugt durch ein unabhängiges, unsynchronisiertes Zufallsprinzip erzeugt. Somit wird die Wahrscheinlichkeit von Störungen bei ereignisbedingter zeitgleicher Betätigung von zwei Sendern erheblich reduziert. Hierzu werden die Steuermittel derjenigen Sender, die für entsprechende Ereignisse ausgelegt werden, mit einem entsprechenden Zeitglied zur Sendeverzögerung des Datentelegramms versehen. Die Sendeverzögerung wird hierbei entweder fest eingestellt, oder, wie oben angeführt variabel, insbesondere durch Zufall, gesteuert.

Die Betätigung eines Schalters durch einen Bediener erfolgt in der Regel mindestens im Sekundenbereich. Um die Zeitbelastung des Bussystems zu reduzieren und damit Störungen zu vermeiden, wird in einer besonderen Ausführungsform die Telegrammlänge der gesendeten Telegramme unabhängig von der Betätigungsdauer durch einen Bediener gestaltet. Hierbei wird die Zeitdauer eines Telegramms bevorzugt auf wenigstens die doppelte Länge eines einzelnen Datenblocks, bestehend aus Adresse bzw. Adresse und Befehl, festgelegt. Durch diese Maßnahme wird erreicht, daß das Sendeaufkommen auf dem Bus minimal ist und hierdurch die Wahrscheinlichkeit einer Datenkollision auf einfache Weise verringert wird.

Da verschiedene Busteilnehmer ohne Prioritätszuweisung bei einem erfindungsgemäßen Bussystem zugriffsberechtigt sind, können verschiedene Datentelegramme innerhalb derselben Zeitperiode auf dem Bus gesendet werden. In diesem Fall erreichen die Datentelegramme die Steuermittel nicht störungsfrei.

In einer besonders vorteilhaften Ausführungsform können ohne aufwendige Ablaufsteuerungen und ohne Prioriätszuweisungen für den Zugriff auf den Bus verschiedene Busteilnehmer bevorzugt werden. Dies wird dadurch erreicht, daß die Sendedauer für die Datentelegramme von Busteilnehmern unterschiedlicher Kategorie unterschiedlich lange gewählt wird. Treffen somit zwei Sender im Bus aufeinander, so dauert die Störung lediglich solange, wie das kürze Datentelegramm gesendet wird. Zuvor oder danach wird das Datentelegramm des bevorzugten Senders störungsfrei übermittelt. Die Information dieses Senders gelangt somit auf jeden Fall störungsfrei zum entsprechenden Empfänger, d. h. Aktor. Es ist lediglich sicherzustellen, daß die längere Telegrammdauer auf jeden Fall solange währt, daß der aus der entsprechenden Adresse bzw. aus Adresse und Befehl bestehende Datenblock in jedem Fall zweimal störungsfrei bis zum Steuermittel gelangt. Für den bevorzugten Sender wird somit die Wahrscheinlichkeit von Kollisionen weiter reduziert. Diese können lediglich noch im Falle der Kollision mit einem gleichermaßen bevorzugten Sender oder aber auch bei einer äußerst unwahrscheinlichen Kollision mit mehreren unmittelbar aufeinander folgenden kürzeren Datentelegrammen auftreten.

In einer zweckmäßigen Ausführungsform wird die Telegrammlänge des bevorzugten Senders so gewählt, daß der zu übertragende Datenblock mindestens viermal häufiger übertragen wird, als vom Sender mit der entsprechenden kürzeren Telegrammlänge. Somit setzt sich das jeweils längere Datentelegramm sicher durch.

Vorzugsweise werden alle Busteilnehmer parallel an die Busleitung angeschlossen. Dies vereinfacht den Aufbau einer erfindungsgemäßen Schaltung. Es muß lediglich in jedem Raum eine Ringleitung z.B. kurz unterhalb der Decke verlegt werden. Jede andere Leitungsführung (Linienstruktur, Sternstruktur, Baumstruktur oder Kombination daraus) ist jedoch ebenfalls möglich. Jeder Sensor bzw. Schalter oder Aktor bzw. Verbraucher kann dann über eine vorzugsweise vertikale Stichleitung an den Bus angeschlossen werden. Hierdurch wird gegenüber der konventionellen Hausbeschaltung eine erhebliche Menge an Kabel gespart.

Wird beispielsweise bei einer konventionellen Elektroinstallation ein Schalter und eine Steckdose unmittelbar übereinander angeordnet, wie das vielfach der Fall ist, so werden hierzu von der nächstliegenden Verteilerdose jeweils zwei separate Zuführungen verlegt. Bei einem erfindungsgemäßen Bus hingegen können Sensoren und Aktoren parallel an ein und dieselbe Leitung angeschlossen werden. Der Vorteil der Busverkabelung leuchtet zu dem unmittelbar ein, wenn man bedenkt, daß häufig auch Wechselschalter und Kreuzschalter bzw. Stromstoß-Relais in der Beschaltung einer Hausbeleuchtung Verwendung finden, wobei zwei oder mehrere parallel geführte drei- und vieradrige Leitungen notwendig sind.

Vorteilhafterweise können mehreren Sensoren und/oder Aktoren die gleiche Adresse zugeordnet werden. Dies hat zur Folge, daß auf einfache Weise von einem Sensor verschiedene Aktoren zu betätigen sind. So können beispielsweise durch Setzen einer gemeinsamen Adresse über einen Schalterdruck zwei verschiedene Lampen geschaltet werden. Ebenso ist es möglich, durch Setzen einer gemeinsamen Adresse von zwei verschiedenen Schaltern den gleichen Verbraucher ein- oder auszuschalten.

Vorzugsweise werden die Steuermittel mit Zählern zur Steuerung von Schaltelementen ausgestattet. In einer einfachen Form kann ein solcher Zähler als einfaches Flip-Flop ausgebildet sein. Durch Ansteuern des Flip-Flops bei verifizierter Adresse wird sodann ein Leistungsschaltelement, beispielsweise ein Triac, ein FET oder ein Relais entsprechend geschaltet, so daß ein entsprechender Verbraucher, beispielsweise eine Lampe, ein- oder ausgeschaltet wird. In einer Weiterbildung der Erfindung kann durch mehrfach aufeinanderfolgendes Verifizieren einer Adresse der Zählerstand eines Zählers mit größerem Zahlenumfang variiert werden und beispielsweise für die Realisierung eine Dimmer-Funktion verwendet werden.

In einer vorteilhaften Weiterbildung der Erfindung werden die Steuermittel der Aktoren mit einem Adressregister und die Steuermittel der Sensoren mit Mitteln zum periodischen Senden einer Adresse versehen. Die Steuermittel eines Aktors erfassen hierbei in dem Adreßregister wenigstens zweimal die periodisch gesandte Adresse. Bevorzugt wird dieses Register als Schieberegister ausgebildet, so daß jeweils die zuletzt gesandten Adressen eingelesen werden. Erst bei doppeltem, zeitlich direkt aufeinanderfolgendem oder je nach Ausführungsformen mehrfachem Verifizieren identischer Adressen in diesem Register wird sodann ein Signal auf den Zähler gegeben. Hierdurch wird vermieden, daß bei Übertragungsfehlern, beispielsweise bei gleichzeitiger Betätigung zweier Schalter mit verschiedenen Adressen, eine unerwünschte Aktion durch eine verfälschte auf dem Bus liegende Adresse ausgelöst wird. Im Falle einer Kollision verhält sich das System somit vollständig passiv, d.h. es wird keiner der gewünschten Schaltvorgänge eingeleitet. Der Benutzer muß den entsprechenden Sensor erneut betätigen, was jedoch im häuslichen Bereich problemlos möglich ist.

Vorteilhafterweise wird eine Schaltvorrichtung (Empfänger/Aktor) zum Abschalten und zum Wiedereinschalten der Energieversorgung für alle oder eine Mehrzahl von Teilnehmern vorgesehen.

Damit ist nach dem Abschalten gleichzeitig die Phase des Stromnetzes strom- und potentialfrei. Diese Abschaltvorrichtung kann beispielsweise zentral für die gesamte Stromversorgung einer Wohnung oder eines Hauses ausgebildet sein. Auf diese Weise ist es möglich, beispielsweise beim Verlassen der Wohnung durch einfache Betätigung eines Sensors in der Nähe des Türbereichs das Stromnetz abzuschalten. Dies kann aus Sicherheitsgründen von Vorteil sein. Vielfach ist in jüngster Zeit auch von einem sogenannten Elektrosmog die Rede. Um diesen zu vermindern, kann mit einer solchen Schaltvorrichtung ein Hausbewohner bei Bedarf von einem Schalter seiner Wahl, der lediglich die Adresse der Schaltvorrichtung aufweisen muß, einen Teil des Stromnetzes oder das gesamte Stromnetz stillegen. Damit sind unerwünschte elektromagnetische oder elektrische Felder abgeschaltet. Dies kann beispielsweise zur Schlafenszeit vom Bett aus durchgeführt werden, wobei zugleich sichergestellt ist, daß keine unnötigen Verbraucher die Nacht über durchlaufen.

Vorzugsweise wird ein Schalter hierzu mit einem Energiespeicher versehen, der dazu dient, die Adresse für die Schaltvorrichtung auf der Busleitung zu generieren, so daß eine Schaltvorrichtung der oben angeführten Art auch vom abgeschalteten Stromnetz aus wieder betätigt werden kann, um das Energieversorgungsnetz wieder in Betrieb zu nehmen.

Die zusätzliche Busleitung kann durch zusätzliche Kontakte über Steckdosen und/oder Stecker an nahezu beliebige Verbraucher oder Schaltelemente durchgeschleift werden. Von Vorteil sind auch Verlängerungskabel, die sowohl die zusätzliche Busleitung als auch oben angeführte Stecker sowie Buchsen mit einem zusätzlichen Buskontakt aufweisen.

Die Steckdosen in einer Hausinstallation mit erfindungsgemäßem Bus können nach Bedarf verschieden ausgestaltet sein. Zum einen können sie permanent mit Spannung versorgt sein, so wie dies bislang der Fall ist. Sie können hierbei mit oder ohne Buskontakt versehen werden.

Zum anderen ist es jedoch möglich, auch Steckdosen wie bereits oben angeführt mit Steuermitteln über den Bus zu betreiben. Diese Steckdosen können über eine entsprechende Adressierung von Sensoren aus mit Strom beschaltet oder von der Stromversorgung abgeschaltet werden. Hierdurch ist das Beschalten beliebiger nicht busfähiger Verbraucher, die über eine solche Steckdose versorgt werden von jedem beliebigen Sensor innerhalb der Hausinstallation möglich. Die letztgenannte Art von Steckdosen mit Steuermitteln kann auch als mobile Steckdose ausgeführt werden, die über ein Anschlußkabel, Stecker und Steckdose mit Buskontakt an den Bus gekoppelt werden. Hier werden vorzugsweise die Adressenänderungsmittel leicht zugänglich ausgebildet.

Weiterhin ist es möglich, über eine Steckdose mit zusätzlichem Busleitungskontakt externe mobile Schalter an den Hausinstallationsbus anzuschließen. Ein solcher Schalter kann beispielsweise als eine Art Fernsteuerung in jede beliebige busfähige Steckdose eingesteckt werden. Es ist ebenso möglich, diesen mobilen Schalter als Diagnosemittel für Installation und Fehlersuche einzusetzen. Er wird vorzugsweise, wie die oben angegebene mobile Steckdose, mit leicht zugänglichen und einfach zu bedienenden Adreßänderungsmitteln versehen.

So können beispielsweise beliebige Adressen durch einfache Schalter einstellbar vorgesehen werden. Denkbar wäre auch eine Ausführung, in der Adressen auf Knopfdruck durchlaufend und in einer LCD-Anzeige darstellbar sind.

Zur Betätigung irgendeines beliebigen Verbrauchers innerhalb des Hausinstallationsbus wird ein solcher Schalter beispielsweise über ein entsprechendes Anschlußkabel in die nächstliegende busfähige Steckdose gesteckt, die entsprechende Adresse am mobilen Schalter eingestellt und über einen Taster der gewünschte Schaltvorgang ausgelöst.

Auch eine echte drahtlose Fernbedienung ist problemlos mit einem erfindungsgemäßen Bus zu kombinieren. Es muß lediglich der Empfängerteil der drahtlosen Fernbedienung, beispielsweise einer herkömmlichen Infrarotfernbedienung, mit den busfähigen Steuermitteln zum Senden von Adressen versehen werden. Dieses Empfängerteil kann dann wiederum an jede beliebige Steckdose angeschlossen werden.

Im einfachen Fall gehen Aktoren, nach Unterbrechung der Stromversorgung und Wiedereinschalten, durch einen Power-On-Reset Impuls in einen definierten Zustand, in aller Regel in den Aus-Zustand, über. Diese Maßnahme senkt weiter die Kosten des Systems. Je nach Bedarf können einzelne Aktoren auch mit einer Memory-Funktion ausgestattet werden, damit diese nach einer Unterbrechung der Stromversorgung ihren vorherigen Schaltzustand wieder einnehmen.

Ein Ausführungsbeispiel der Erfindung ist in der Zeichnung dargestellt und wird anhand der Figuren nachfolgend näher erläutert.

Im einzelnen zeigen
- Fig. 1: eine skizzenhafte Darstellung der Busstruktur mit verschiedenen Busteilnehmern;
- Fig. 2: ein Blockdiagramm zum Aufbau eines Sensors;
- Fig. 3: ein Blockdiagramm zum Aufbau eines Aktors mit einfacher Umschaltung;
- Fig. 4: ein Blockdiagramm zum Aufbau eines Aktors mit Dimmerfunktion;
- Fig. 5: eine perspektivische Darstellung eines hardwaremäßig realisierten Sensors;
- Fig. 6: eine perspektivische Darstellung eines Aktors;
- Fig. 7: eine perspektivische Darstellung einer busfähigen Steckdose und eines busfähigen Steckers;
- Fig. 8: eine perspektivische Darstellung eines mobilen Schalters;
- Fig. 9: eine perspektivische Darstellung einer mobilen Steckdose;
- Fig. 10: eine perspektivische Darstellung eines busfähigen Verlängerungskabels;
- Fig. 11: eine schematische Darstellung einer Raumverkabelung mit erfindungsgemäßem Hausinstallationsbus;
- Fig. 12: eine entsprechende Verkabelung mit konventionellen Mitteln
- Fig. 13: ein Blockdiagramm einer Schaltvorrichtung zum Abschalten der Energieversorgung,
- Fig. 14: ein Zeitdiagramm zur Veranschaulichung der Zeitverzögerung bei zeitgleich betätigten Schaltern bzw. Sensoren,
- Fig. 15: ein Blockdiagramm von Steuermitteln mit Zeitverzögerung,
- Fig. 16: ein Zeitdiagramm zur Darstellung eines Datentelegramms,
- Fig. 17: ein Zeitdiagramm zur Darstellung von verschiedenen Datentelegrammlängen unterschiedlicher Kategorien von Busteilnehmern,
- Fig. 18: ein Diagramm zur Veranschaulichung von Steuermitteln mit Sender und Empfänger,
- Fig. 19: eine perspektivische Darstellung eines auf eine Leiterplatte integrierten Schalters,
- Fig. 20: eine weitere Ausführungsform eines in eine Leiterplatte integrierten Schalters,
- Fig. 21: eine Draufsicht auf die Leiterplatte gemäß Fig. 20 und
- Fig. 22: ein schematischer Schaltplan zur Veranschaulichung des Widerstandes zwischen Nulleiter und Schutzerde.

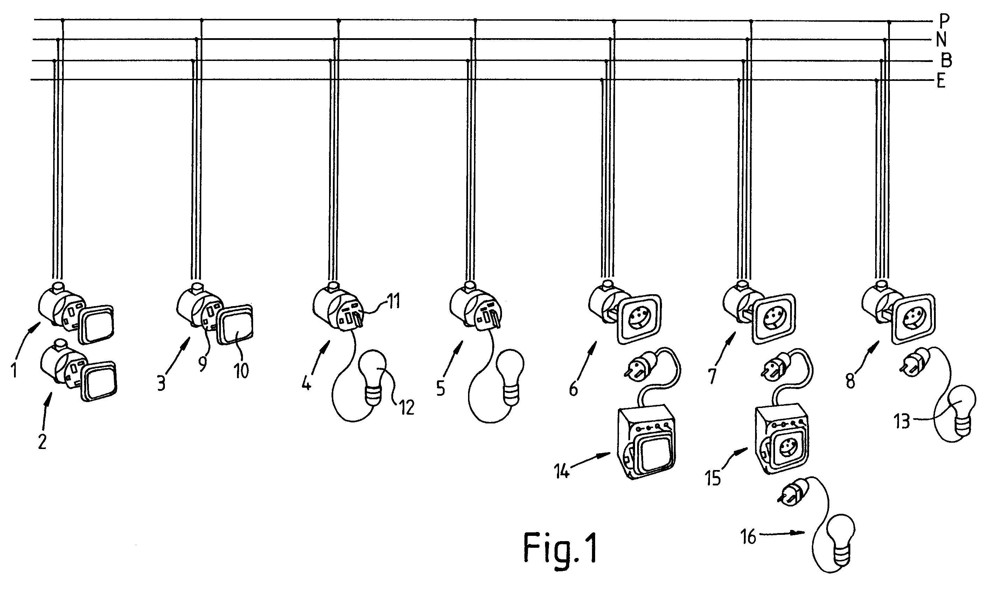

Die Darstellung gemäß Fig. 1 zeigt die einzelnen Leitungen P, N, B, E die, wie oben angeführt, in einem vieradrigen Stromkabel verlegt werden. Die vier Adern umfassen eine Phase P, einen Nulleiter N, eine Busleitung B sowie einen Schutzleiter E. An diese Netzleitungen sind parallel verschiedene Sensoren 1, 2, 3 und Aktoren 4, 5 angeschlossen. Ebenso sind parallel drei Steckdosen 6, 7, 8 vorgesehen, die in dieser Ausführung die Busleitung B nur durchschleifen.

Die Sensoren 1, 2, 3 umfassen jeweils Steuermittel 9 sowie einen Schalter 10, sie werden anhand der nachfolgenden Beschreibung näher erläutert werden. Die Aktoren 4, 5 umfassen jeweils ebenfalls Steuermittel 11 sowie einen Verbraucher 12, im vorliegenden Fall jeweils eine Lampe.

Zum Einstecken in die Steckdosen 6, 7, 8 sind verschiedene Komponenten eingezeichnet. Dies kann einmal unmittelbar ein nicht busfähiger Verbraucher 13 sein. In die Steckdose 6 ist zum Einstecken ein mobiler Schalter 14 vorgesehen, auf den weiter unten näher eingegangen wird. Zum Einstecken in die Steckdose 7 ist eine mobile Steckdose 15 dargestellt, in die wiederum ein herkömmlicher Verbraucher 16 einzustecken ist.

Ein erfindungsgemäßes Bussystem ist bereits mit zwei Busteilnehmern, beispielsweise einem Sensor 1 und einem Aktor 4 realisierbar. Weitere Komponenten sind hierzu nicht notwendig.

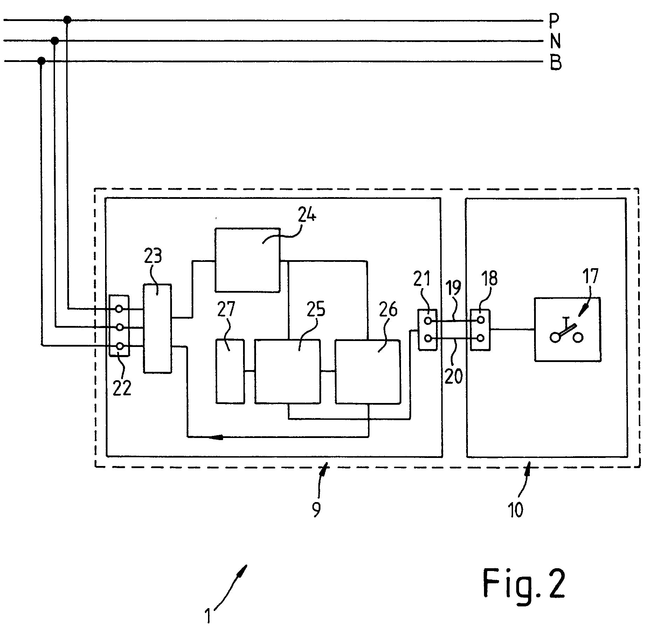

Fig. 2 veranschaulicht den Aufbau eines Sensors, beispielsweise des Senors 1. Er umfaßt Steuermittel 9 sowie Schaltmittel 10. Die Schaltmittel 10 umfassen vorliegend einen Taster 17 sowie eine doppelte Anschlußklemme 18. Die Schaltmittel 10 werden somit wie bisher bekannte Schalter über zwei Anschlußleitungen 19, 20 angeschlossen.

Die Steuermittel 9 weisen ihrerseits eine doppelte Anschlußklemme 21 für den Anschluß an die Schaltmittel 10 auf. Von der Netzseite her sind die Steuermittel über eine weitere Anschlußklemme 22 mit der Phase P, dem Nulleiter N sowie der Busleitung B verbunden. Unmittelbar hinter der Anschlußklemme 22 ist ein Verpolschutz 23 vorgesehen. Der Verpolschutz 23 stellt sicher, daß bei Fehlbeschaltung (z.B. Phase P an Busleitung B) das Steuermittel 9 nicht defekt geht.

Über die Stromversorgung 24 werden ein Encoder 25 sowie ein Treiber 26 mit Strom versorgt. Der Encoder 25 steht mit einem Adreßspeicher 27 in Verbindung, an dem die Adresse der Steuermittel 9 bevorzugt variabel, z.B. mit Jumper oder Dip-Schalter einstellbar ist. Der Treiber 26 dient dazu, Signale zu verstärken und an die Busleitung B abzugeben. Bei Betätigung des Tasters 17 wird der Encoder 25 dazu aktiviert, über den Treiber 26 periodisch die im Adreßspeicher 27 eingestellte Adresse über die Busleitung B zu senden. Dies erfolgt, solange der Taster 17 gedrückt ist.

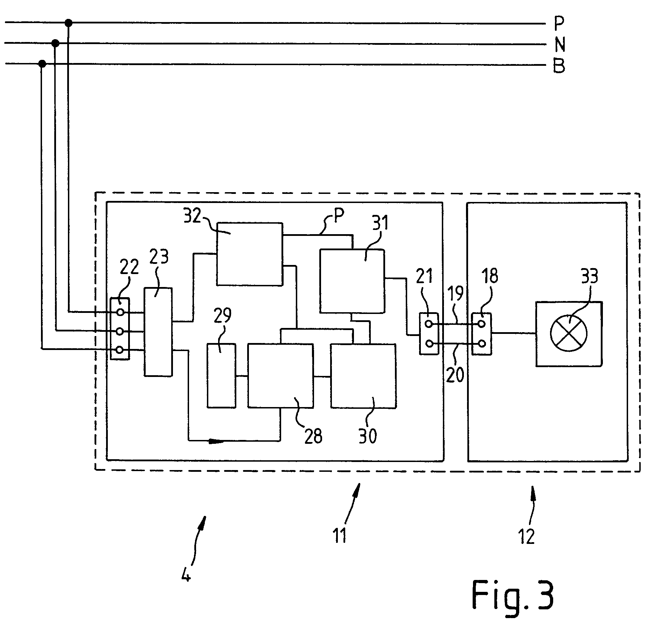

Dieses Signal kommt in allen Aktoren, beispielsweise einem Aktor 4 gemäß Fig. 3, über die Busleitung B in Steuermitteln 11 eines Verbrauchers 12 an. Die Steuermittel 11 umfassen wiederum eine Anschlußklemme 22 sowie einen Verpolschutz 23.

Ein Decoder 28, der über ein nicht näher dargestelltes Schieberegister verfügt, ist mit einem Adreßspeicher 29 in Verbindung, an dem bevorzugt die Adresse variabel einstellbar ist. Der Decoder 28 empfängt die auf der Busleitung B periodisch ankommenden Adreßsignale. Diese werden nacheinander in seinem internen Schieberegister gespeichert und mit den Daten des Adreßspeichers 29 verglichen. Im vorliegenden Ausführungsbeispiel müssen die Daten zweimal hintereinander richtig empfangen, d.h. zweimal identisch zu demjenigen des Adreßspeichers 29 sein. Bei Übereinstimmung aktiviert der Decoder 28 einen Zähler 30.

Bei einem Aktor 4 gemäß Fig. 3 besteht dieser Zähler 30 aus einem einfachen Flip-Flop. Dieses Flip-Flop ändert aufgrund seiner Aktivierung durch den Decoder 28 seinen Zustand und schaltet ein Leistungsteil 31, das im einfachstem Fall aus einem Leistungshalbleiter bestehen kann, beispielsweise einem Triac. Dieses Leistungsteil 31 ist in der Lage, die Phase P, die ihr über eine Stromversorgung 32 zugeführt wird, auf die Anschlußklemme 18 durchzuschalten. Die Stromversorgung 32 versorgt zudem den Decoder 28 sowie den Zähler 30 mit der notwendigen Spannung.

Der Verbraucher 12, der vorliegend eine Lampe 33 umfaßt, wird wiederum lediglich über die doppelte Anschlußklemme 18 und zwei Anschlußkabel 19, 20 in bekannter Weise angeschlossen.

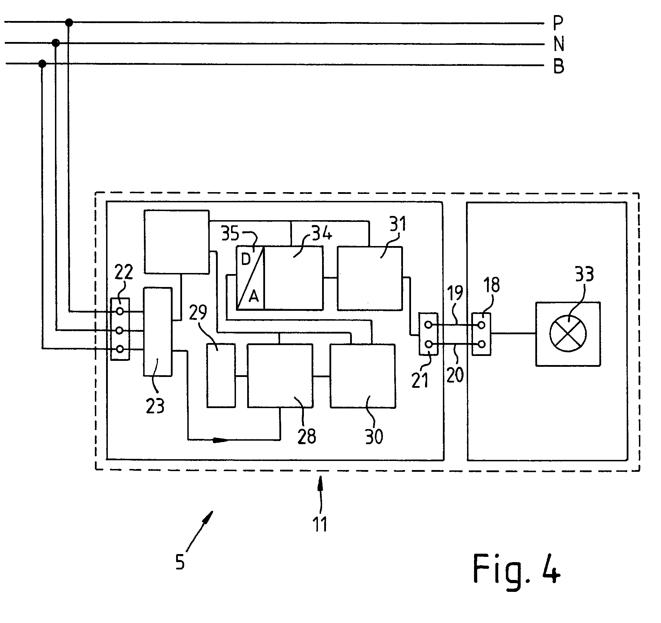

Der Aktor gemäß Fig. 4, der beispielsweise der Aktor 5 sein kann, entspricht im wesentlichen dem vorgenannten Beispiel gemäß Fig. 3. Zusätzlich ist nun jedoch eine Phasenanschnittsteuerung 34 mit einem Digital-Analogwandler 35 vorgesehen. Der Zähler 30 stellt nunmehr einen Zähler mit größerem Zahlenumfang dar, der beispielsweise bis zur Zahl 10 periodisch hochzählt. Er wird jedes Mal, wenn der Decoder 28 eine Adresse verifiziert, um die Zahl 1 erhöht. Über den Digital-Analogwandler 35 wird der jeweilige Zahlenwert in eine analoge Regelspannung zur Steuerung der Phasenanschnittsteuerung 34 gewandelt, die ihrerseits das Leistungsteil 31 steuert. Je nach Betrag der analogen Regelspannung erfolgt der Triggerimpuls zur Zündung des Triacs zu einem früheren oder späteren Zeitpunkt. Damit kann die Helligkeit der Lampe 33 eingestellt werden. Die Steuermittel 11 besitzen somit eine Dimmerfunktion.

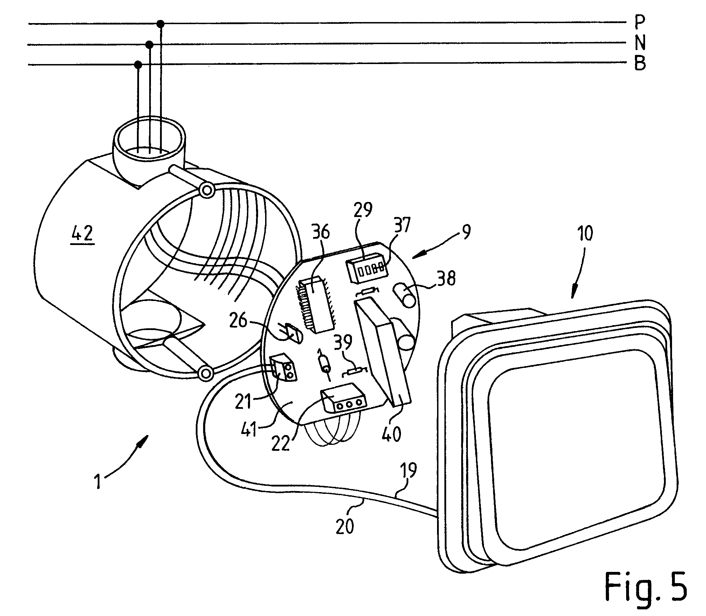

Fig. 5 zeigt die Ausbildung eines Sensors 1 in perspektivischer auseinandergezogener Darstellung. Schaltmittel 10 sind über zwei Leitungen 19, 20 an die Anschlußklemme 21 der Steuermittel 9 angeschlossen. Ein Chip 36 umfaßt den Encoder 25. Deutlich erkennbar ist die Ausbildung des Adreßspeichers 29 mit verstellbaren Dip-Schaltern 37. Ein Transistor 26 dient als Treiber. Diverse Kondensatoren 38, Ohm'sche Widerstände 39 sowie ein Gleichrichter 40 bilden die Stromversorgung für die Steuerungsmittel 9. Über die Anschlußklemme 22 stehen die Steuermittel 9 mit den Leitungen P, N, B in Verbindung. Die Platine 41, die die Steuermittel 9 beinhaltet, paßt problemlos in eine Wanddose 42, die üblicherweise hinter jedem Schalter bzw. hinter jeder Steckdose in der Wand eingebaut ist. Der Schalter 10 entspricht einem üblichen Schalter, wie er auch bei konventioneller Verkabelung verwendet wird.

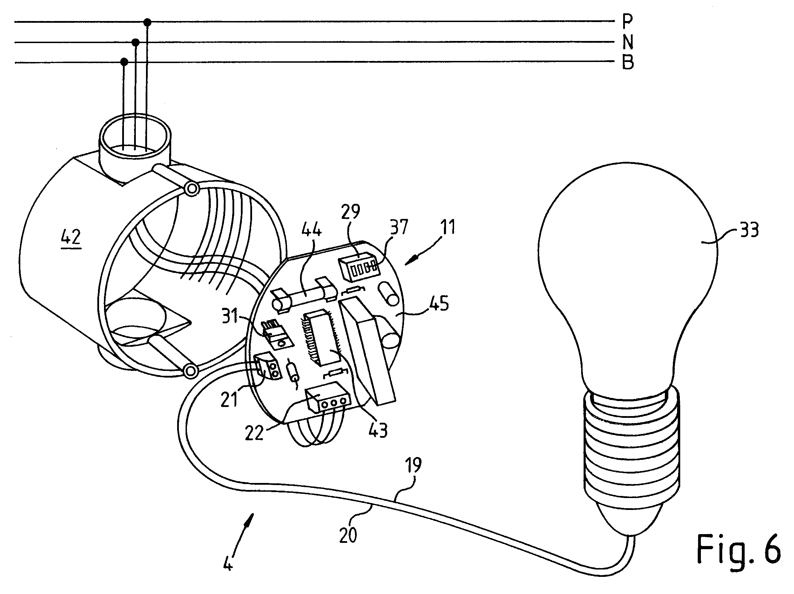

Fig. 6 zeigt in perspektivischer Darstellung den Aufbau eines Aktors, beispielsweise des Aktors 4. Eine Lampe 33 ist über Leitungen 19, 20 mit Steuermitteln 11 verbunden. Eine der Leitungen 19, 20 wird in diesem Fall über ein Leistungsteil 31, beispielsweise einen Triac geschaltet. Ein Chip 43 umfaßt den Decoder 28. Ein weiterer nicht näher dargestellter Chip, ähnlich Chip 43, umfaßt den Zähler 30. Wiederum ist ein Adreßspeicher 29 mit Dip-Schaltern 37 vorgesehen. Eine Sicherung 44 sichert die Steuerungsmittel 11 gegen einen zu hohen, unzulässigen Strom ab. Wiederum paßt die Platine 45, die die Steuermittel 11 trägt, in eine Wand- bzw. Deckendose 42.

Wie anhand der bisherigen Beschreibung sowie der angeführten Figuren erkennbar ist, sind lediglich die Steuermittel 9 bzw. 11 zusätzlich zu den bislang bekannten Installationskomponenten notwendig. Diese sind auf einfache Weise über die Anschlußklemmen 21 bzw. 22 von jedermann in die Wanddosen 42 einzusetzen und an die Netz- bzw. Busleitungen P, N, B anzuschließen.

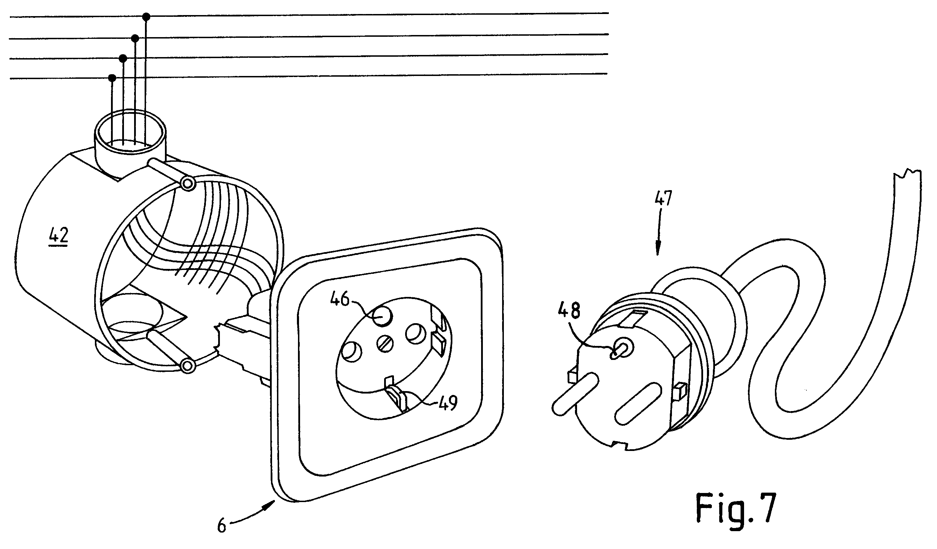

In Fig. 7 ist eine busfähige Steckdose 6 erkennbar. Diese Steckdose 6, die in vorliegendem Beispiel ihrerseits nicht mit Steuermitteln 11 versehen ist, weist einen zusätzlichen Kontakt 46 als Buskontakt zum Durchschleifen der Busleitung B auf. Ein entsprechender Stecker 47 eines Anschlußkabels, beispielsweise eines Verlängerungskabels oder eines busfähigen Geräts ist mit dem entsprechenden Steckkontakt 48 versehen. Gegenüber den vorgenannten Zeichnungen ist hier die vierte Leitung E dargestellt, über die der Schutzleiter läuft und an die entsprechende Schutzleiterkontakte 49 angeschlossen sind. Bei Bedarf kann jede Steckdose 6 mit Steuermitteln 11 versehen werden, so daß auch eine Wandsteckdose von beliebigen Sensoren 1, 2, 3 ein- bzw. abgeschaltet werden kann.

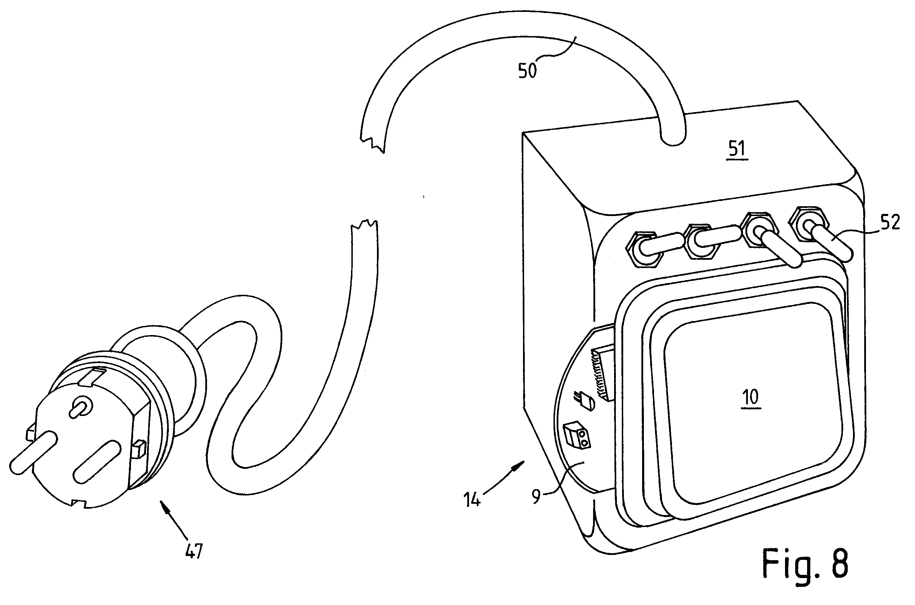

Fig. 8 zeigt einen mobilen Schalter 14, der über ein Anschlußkabel 50 sowie einen busfähigen Stecker 47 an einen erfindungsgemäßen Hausinstallationsbus anzuschließen ist. In einem Gehäuse 51 befinden sich Steuermittel 9. In dem Gehäuse 51 ist wiederum ein Schalter 10 angebracht. Im Gegensatz zum vorbeschriebenen Sensor 1 sind nunmehr Schalter 52 anstelle der Dip-Schalter vorgesehen, um ohne Öffnung des Gehäuses 51 die Adresse, die durch Betätigung des Schalters 10 angesprochen werden soll, einzustellen. Der mobile Schalter 14 gibt somit die Möglichkeit einer Fernbedienung, einer Diagnose oder Fehlersuche. Anstelle der Schalter 52 könnten auch andere Lösungen, z.B. ein LCD-Display sowie eine durchlaufende Adressierung bei Tastendruck einer Adreßtaste, vorgesehen werden.

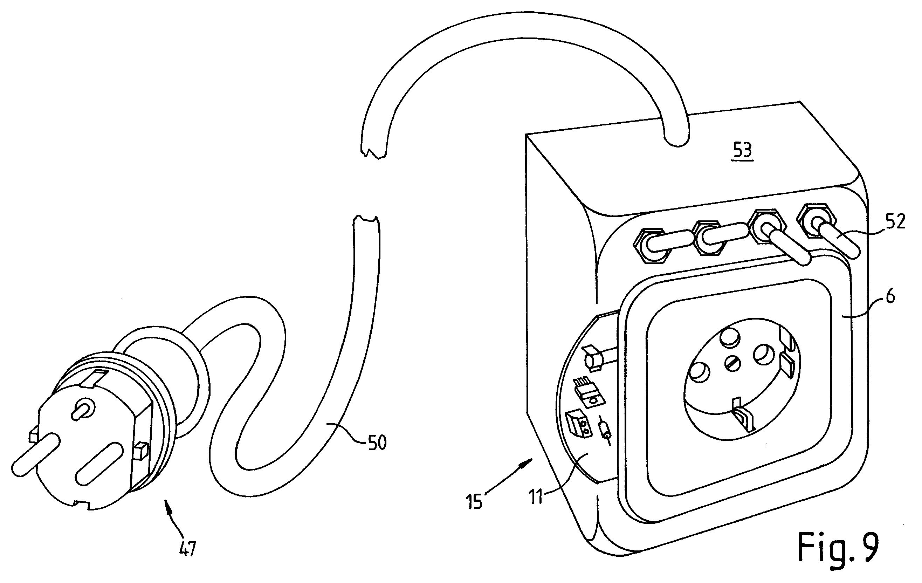

In der Darstellung gemäß Fig. 9 ist eine mobile variabel adressierbare Steckdose 15 skizziert. Eine konventionelle oder busfähige Steckdose 6 ist in ein Gehäuse 53 eingebaut, das wiederum Adreßschalter 52 aufweist. Im Innern des Gehäuses 53 sind Steuermittel 11 zum Empfang von Adreßdaten vorgesehen. Über ein Anschlußkabel 50 sowie einen busfähigen Stecker 47 kann diese mobile Steckdose 15 an den Bus angeschlossen werden. Ein beliebiger Verbraucher, beispielsweise eine herkömmliche Stehlampe etc. kann über die Steckdose 6 angeschlossen werden.

Die Adressierung mit den Adreßschaltern 52 legt fest, über welchen Sensor, d.h. über welchen Schalter mit Steuermitteln 9 zum Senden, der konventionelle Verbraucher, der in die Steckdose 6 eingesteckt ist, geschaltet werden kann.

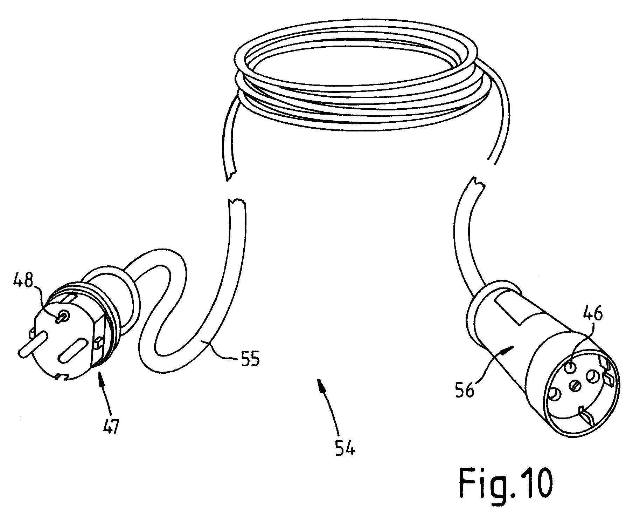

Fig. 10 zeigt ein busfähiges Verlängerungskabel 54, das an einem Ende eines vieradrigen Kabels 55 einen busfähigen Stecker 47 mit Steckkontakt 48 und am anderen Ende des Kabels 55 eine entsprechende Buchse 56 mit Buskontakt 46 aufweist.

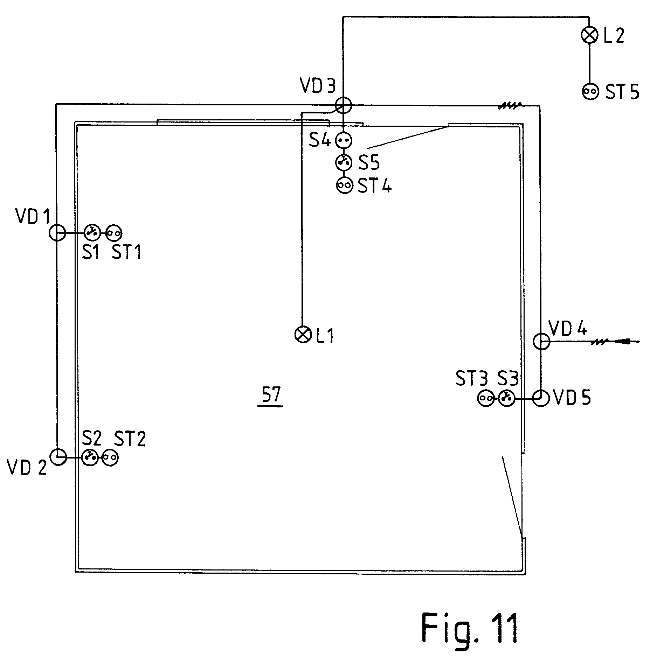

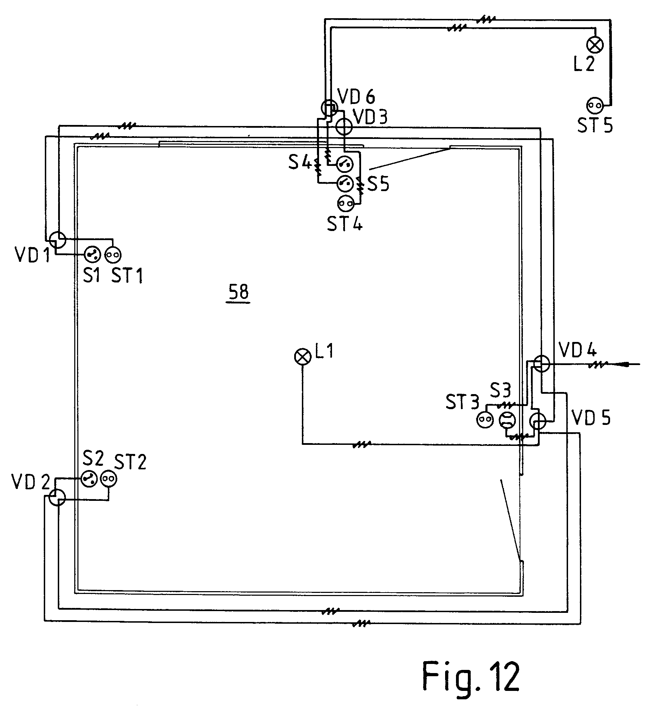

Anhand der Fig. 11 und 12 wird der Unterschied in der Verkabelung mit einem Hausinstallationsbus gemäß der Erfindung zur konventionellen Verkabelung deutlich. Der schematisch dargestellte Raum 57 bzw. 58 soll beispielsweise ein Schlafzimmer darstellen. Die Schalter sind hierbei mit dem Kürzel S, Steckdosen mit dem Kürzel ST gekennzeichnet. Weiterhin befinden sich in dem Raum 57 bzw. 58 Lampen, die mit L gekennzeichnet sind, sowie Verteilerdosen VD.

In der Businstallation gemäß Fig. 11 wird über eine Verteilerdose VD4 die Netzleitung eingeführt und eine nicht notwendigerweise geschlossene Ringleitung rund um das Zimmer 57 gelegt. Zu dem Schalter S1 sowie der Steckdose ST1 wird von der Verteilerdose VD1 eine einzige Stichleitung nach unten geführt. Ebenso wird für den Schalter S2 und der Steckdose ST2 von der Verteilerdose VD2 nur eine Stichleitung gelegt. Schalter S3 sowie Steckdose ST3 sind entsprechend über die Verteilerdose VD5 angeschlossen. An der Verteilerdose VD3 wird eine Stichleitung zu den Schaltern S4, S5 sowie der Steckdose ST4 abgezweigt. Die Deckenlampe 1 wird ebenfalls über eine einzige Stichleitung angeschlossen. Eine Außenlampe L2 sowie eine Steckdose ST5 ist zusätzlich über eine Stichleitung an der Verteilerdose 3 angeschlossen.

Sämtliche Busteilnehmer werden parallel am nächstmöglichen Punkt an die Busleitung angeschlossen. Welche Lampe von welchem Schalter aus zu betätigen ist, kann sodann an den Steuermittel 9 zum Senden in jedem Schalter S1 bis S5 sowie in den Steuermitteln zum Empfang in den Lampen L1 bzw. L2 eingestellt werden. Sofern die Steckdosen über Steuermittel zum Empfang 11 verfügen, was beispielsweise an der Außensteckdose ST5 zu empfehlen ist, kann die Steckdose ST5 über ein beliebigen, entsprechend eingestellten Schalter S1 bis S5, beispielsweise über den Schalter S4 oder S5 angesteuert werden.

Eine vergleichbare Verkabelung auf konventionelle Bauweise gemäß Fig. 12 benötigt, wie ohne weiteres sichtbar wird, eine erheblich größere Menge an Kabel. Hinzu kommt der Nachteil, daß die dargestellte Verkabelung nicht die Flexibilität des erfindungsgemäßen Busses aufweist. Sämtliche Funktionen der Schalter 1 bis 5 sind hier hardwaremäßig durch Verdrahtung fest vorgegeben. S1, S2 und S3 dienen beispielsweise zum Betrieb der Deckenlampe L1. Der Schalter S4 für die Betätigung der Außenlampe L1 sowie der Schalter S5 zum Abschalten der Außensteckdose ST5. Diese einmal mit viel Kabelaufwand installierten Funktionen können allenfalls durch eine entsprechend aufwendige Änderung der Verdrahtung abgeändert werden.

Demgegenüber bietet der Hausinstallationsbus eine erheblich größere Flexibilität. Die Funktion jedes Busteilnehmers kann beliebig durch Adressenänderung geändert werden. Falls eine neue Steckdose bzw. ein zusätzlicher Schalter in einem Raum angebracht werden soll, so genügt idealerweise eine weitere Wanddose, die direkt über oder unter den bereits vorhandenen Dosen angebracht wird, wobei die Leitungen P, N, B und E aus der benachbarten Dose abgegriffen werden, oder eine Stichleitung, vorzugsweise in vertikaler Richtung nach oben und ein paralleler Anschluß an die durchgeführte Ringleitung des Installationsbusses.

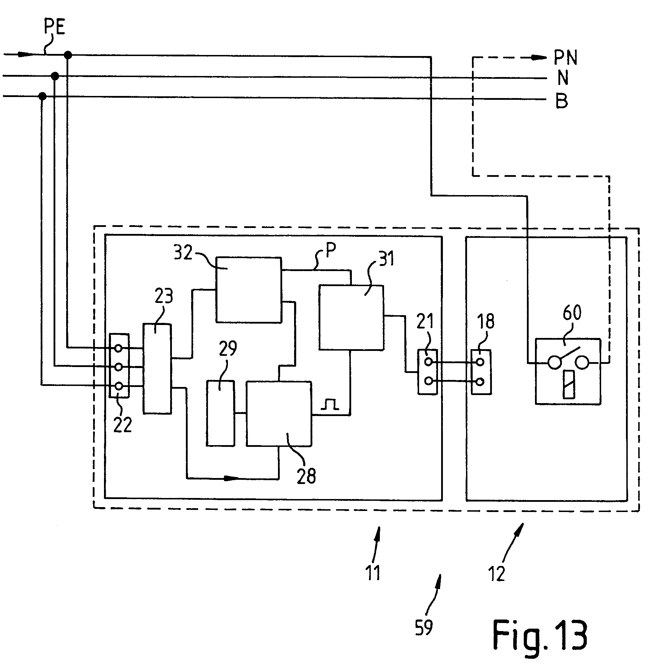

Fig. 13 zeigt eine Schaltvorrichtung 59, die zum Ab- bzw. Wiedereinschalten der Energieversorgung über eine von dem Aktor 12 der Schaltvorrichtung 59 abgehende Phasenleitung PN für mehrere oder alle Busteilnehmer vorgesehen ist. Die Steuermittel 11 entsprechen im wesentlichen den oben zu Fig. 3 beschriebenen Steuermitteln. In der Darstellung der Steuermittel 11 gemäß Fig. 13 fehlt gegenüber der Ausführung nach Fig. 3 lediglich der Zähler 30. Um die oben angegebene Sicherungsfunktion des Zählers 30 auch im Ausführungsbeispiel gemäß Fig. 13 zu erhalten, kann ein solcher jederzeit analog der Ausführung gemäß Fig. 3 vorgesehen werden.

Anstatt der Lampe 33 ist vorliegend ein Stromstoßrelais 60 als Aktor oder Verbraucher 12 angeordnet. Die eingehende Phase PE wird im dargestellten Schaltzustand des Stromstoßrelais 60 von der Phase PN des Energienetzes für alle oder mehrere Busteilnehmer getrennt. Durch entsprechende Aktivierung der Busleitung P kann das Stromstoßrelais 60 geschlossen werden, so daß die eingehende Phase PE auf die Phase PN des Energienetzes durchgeschaltet wird.

Durch die erfindungsgemäßen Merkmale läßt sich das vorgestellte Bussystem auf einfache und kostengünstige Weise fertigen, wobei insbesondere darauf hinzuweisen ist, daß von den Steuermitteln 9, 11 abgesehen sämtliche Komponenten, die bislang in Hausinstallationen Verwendung finden, weiter verwendbar sind. Sowohl der Neueinbau sowie die Nachrüstung verlegter Installationen ist somit mit geringstem Aufwand möglich. Die Verlegung des Bussystems ist durch jedermann durchführbar, der bislang in der Lage war, eine Hausinstallation durchzuführen.

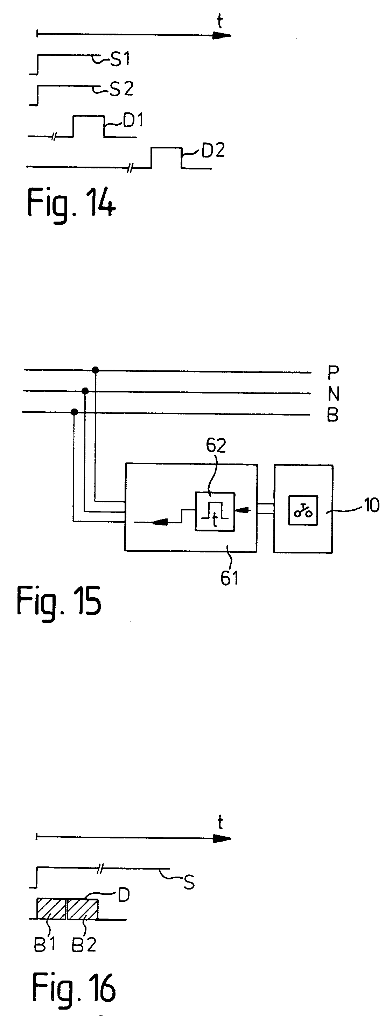

In Fig. 14 ist der Zeitablauf dargestellt, sofern ein Zeitverzögerungsglied 62 (siehe Fig. 15) in den Steuermitteln 61 für einen Schalter bzw. Sensor 10 vorgesehen ist. Wie bereits weiter oben angeführt, kann ein Ereignis erwünschtermaßen zwei Funktionen zeitgleich auslösen. Dies kann beispielsweise dann der Fall sein, wenn durch einen Schalter 2 Aktoren betätigt werden sollen oder, beispielsweise durch einen Sensor wie in einem Windwächter, zwei entsprechende Ereignisse ausgelöst werden sollen. In diesem Fall ist ein Zeitverzögerungsglied 62 besonders empfehlenswert, wodurch die Datentelegramme D1 und D2 zeitlich versetzt über den Bus gesendet werden.

Fig. 16 veranschaulicht, wie unabhängig von der Betätigungsdauer bzw. der Haltezeit eines Schalters oder Sensors S eine vorgegebene Datentelegrammlänge D, im dargestellten Ausführungsbeispiel bestehend aus zwei gleichen Datenblöcken B1 und B2, erzeugt wird. Hierdurch wird die Zeitbelastung und damit die Wahrscheinlichkeit einer Datenkollision des Busses deutlich reduziert, da das Sendeaufkommen erheblich verringert wird.

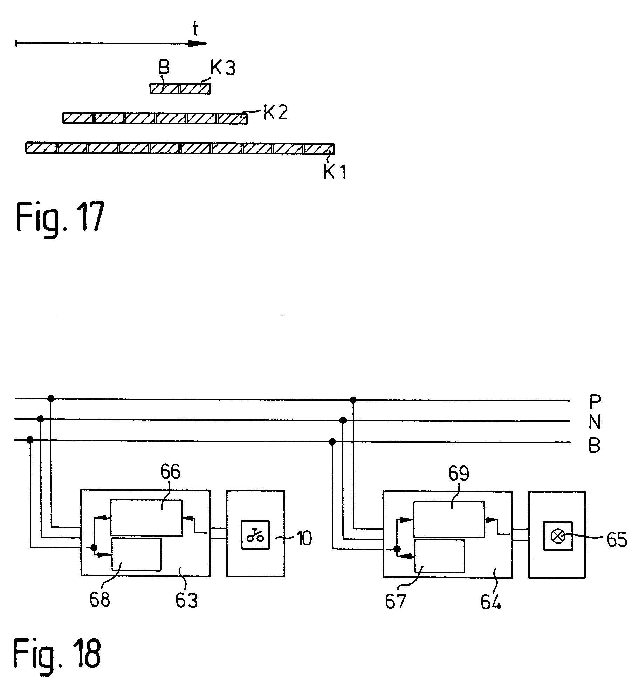

Fig. 17 veranschaulicht in einem Zeitdiagramm über einen Zeitstrahl t, wie verschiedene Kategorien von Busteilnehmern mit unterschiedlichen Längen von Datentelegrammen K1, K2, K3 versehen werden können. Das Datentelegramm K3 des Busteilnehmers dieser Kategorie umfaßt zwei Datenblöcke B, das Datentelegramm K2 sechs Datenblöcke und das Datentelegramm K1 insgesamt zehn Datenblöcke. Wie anhand dieses Diagramms gemäß Fig. 17 unschwer erkennbar, ist hierdurch beim Aufeinandertreffen von Datentelegrammen unterschiedlicher Kategorie sichergestellt, daß von der jeweils längeren Kategorie wenigstens zwei Datenblöcke des Datentelegramms K1 bzw. K2 störungsfrei über den Bus gesendet werden.

Das Blockdiagramm gemäß Fig. 18 zeigt am Beispiel von Steuermitteln 63 für einen Schalter 10 bzw. anhand von Steuermitteln 64 für eine Lampe 65, daß die entsprechenden Steuermittel 63, 64 sowohl ein Sendeteil 66, 67 als auch ein Empfangsteil 68, 69 beinhalten können. Der Schalter 10 sowie die Lampe 65 stehen hierbei für jede beliebige Art von Bedienelement bzw. Sensor oder Verbraucher.

Die Steuermittel 63, 64 sind jeweils in der Lage, entsprechende Meldefunktionen, z. B. optisch oder akustisch oder auf sonstige Weise, zu erfüllen. Das Steuermittel zum Senden 63 erhält in diesem Fall zusätzlich zum Sendeteil 66 ein Empfangsteil 68, ebenso wie das Steuermittel 64 zum Empfangen zusätzlich zum Empfangsteil 69 ein Sendeteil 67 erhält. Das Steuermittel 63 ist somit zusätzlich zum Senden eines Datenblocks (bestehend aus einer Adresse oder eine Adresse und einem Befehl) in der Lage, selbst eine Meldung zu empfangen und auszuwerten. Ebenso ist das Steuermittel 64 zum Empfang in der Lage, sowohl einen Datenblock zu empfangen und entsprechend zu agieren, insbesondere, falls vorhanden, den Befehl des Datenblocks auszuwerten und zusätzlich eine Meldung zu senden. Auch in diesem Fall erfolgt der Ablauf nach wie vor ohne zusätzliche Ablaufsteuerung zur Synchronisierung des Ablaufes und insbesondere ohne Prioritätszuweisung von Teilnehmern für den Zugriff auf den Bus.

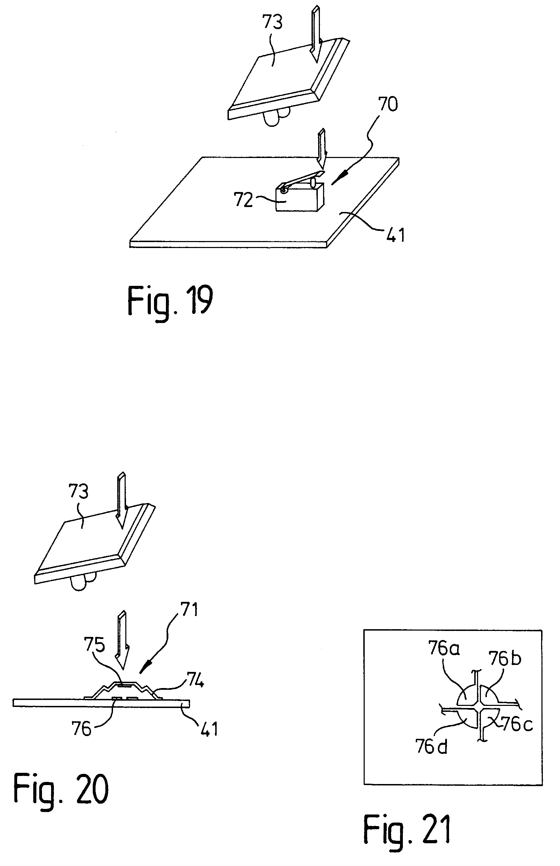

Die Figuren 19 bis 21 veranschaulichen die Möglichkeit, einen Niedervoltschalter 70, 71 auf einer Platine 41 zu integrieren. Im Falle des Ausführungsbeispiels gemäß Fig. 19 wird ein Mikro-Schalter 72 auf der Leiterplatte 41 verlötet. Somit wird zusätzlich lediglich eine Wippe 73 als Betätigungselement für den Schalter 72 benötigt. Durch den Einbau einer derartigen Anordnung werden nicht nur die Steuermittel für den Bus in die entsprechende Wanddose oder das entsprechende Gerät installiert, sondern es wird zugleich der bisherige notwendige Betätigungsschalter ersetzt.

Die gleiche Funktion erfüllt die Anordnung gemäß Fig. 20, wobei hier sogar der Mikro-Schalter 72 dadurch ersetzt wird, daß ein einfaches bewegliches, rückstellendes und isoliertes Teil 74, das einen Kontakt 75 trägt, auf der Leiterplatte 41 oberhalb von bestimmten Leiterbahnen 76 angeordnet wird. Fig. 21 zeigt ein Beispiel für eine derartige Anordnung von Leiterbahnen 76a, 76b, 76c, 76d. Durch Niederdrücken des beweglichen Teils 74 und somit des Kontaktes 75 auf die Leiterbahnen 76a, b, c, d, werden diese Leiterbahnen 76a, b, c, d untereinander kurzgeschlossen. Durch die rückstellende Ausbildung des beweglichen Teils 74 löst sich dieser Kontakt selbsttätig. Auch hier wird zur Vervollständigung eine Wippe 73 eingesetzt, wodurch der bisherige notwendige separate Schalter vollständig ersetzt ist.

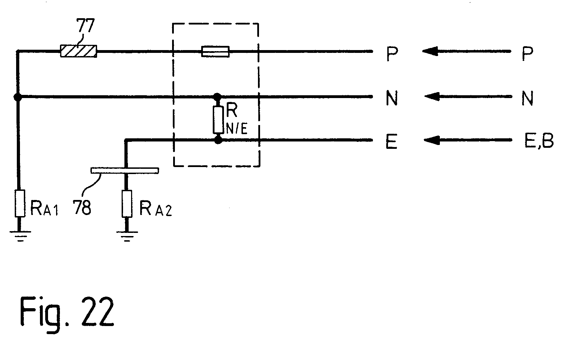

Die Schaltung gemäß Fig. 22 dient zur Verwendung des Schutzleiters E zugleich als Busleitung B. Je nachdem, wie der Stromkreisverteiler aufgebaut ist, befindet sich anstelle des in Fig. 22 dargestellten Widerstandes RN/E eine Brücke zwischen dem Nulleiter und der Schutzerde oder auch nicht. Die Phase P wird über einen Transformator 77 mit Strom versorgt, der über den Widerstand RA1 mit der Erde verbunden ist. Die Schutzerde ist über eine Potentialausgleichsschiene 78 und einen Widerstand RA2 ebenfalls geerdet. Die Widerstände RA1 und RA2 in der Größenordnung von einigen Ohm stellen die immer vorhandenen sogenannten Übergangswiderstände dar.

Im Falle einer vorhandenen Brücke anstelle des Widerstandes RN/E (sogenanntes TN-C-S-System) ist sicherzustellen, daß der die Brücke ersetzende Widerstand RN/E niederohmig und in derselben Größenordnung wie die Übergangswiderstände RA1 und RA2 ist. Die Reihenschaltung von RN/E und RA2 liegt damit in der heutzutage erlaubten Toleranzgrenze des Widerstandes RA2. Damit wäre sichergestellt, daß aus sicherheitsrelevanten Gründen ein sehr geringer Ableitwiderstand von dem Nulleiter N zur Erde vorhanden ist.

Im Falle, daß ohnehin keine Brücke anstelle des Widerstandes RN/E installiert ist (TT-System) wirkt sich der Widerstand RN/E als Parallelschaltung zu den immer vorhandenen Übergangswiderständen zur Erde RA1 und RA2 in der Größenordnung von einigen Ohm sogar widerstandssenkend und damit von Vorteil aus.

Die Verwendung des Widerstandes RN/E ermöglicht die Verwendung der Schutzleitung E als Busleitung B, da hierdurch geringfügige, definierte Potentialunterschiede zwischen dem Nulleiter N und dem Schutzleiter E ermöglicht werden. Der Widerstand RN/E kann zugleich als Abschlußwiderstand zwischen dem Nulleiter N und dem Schutzleiter E bzw. der Busleitung B dienen.
- 1: Sensor
- 2: Sensor
- 3: Sensor
- 4: Aktor
- 5: Aktor
- 6: Steckdose
- 7: Steckdose
- 8: Steckdose
- 9: Steuermittel
- 10: Schalter
- 11: Steuermittel
- 12: Verbraucher
- 13: Verbraucher
- 14: mobiler Schalter
- 15: mobile Steckdose
- 16: Verbraucher
- 17: Taster
- 18: Anschlußklemme
- 19: Leitung
- 20: Leitung
- 21: Anschlußklemme
- 22: Anschlußklemme
- 23: Verpolschutz
- 24: Stromversorgung
- 25: Encoder
- 26: Treiber
- 27: Adreßspeicher
- 28: Decoder
- 29: Adreßspeicher
- 30: Zähler
- 31: Leistungsteil
- 32: Stromversorgung
- 33: Lampe
- 34: Phasenanschnittssteuerung
- 35: D/A-Wandler
- 36: Chip
- 37: Dip-Schalter
- 38: Kondensator
- 39: Ohm'scher Widerstand
- 40: Gleichrichter
- 41: Platine
- 42: Wanddose
- 43: Chip
- 44: Sicherung
- 45: Platine
- 46: Buskontakt
- 47: Stecker
- 48: Bus-Steckkontakt
- 49: Schutzleiterkontakte
- 50: Anschlußkabel
- 51: Gehäuse
- 52: Schalter
- 53: Gehäuse
- 54: Verlängerungskabel
- 55: Kabel
- 56: Buchse
- 57: Raum
- 58: Raum
- 59: Schaltvorrichtung
- 60: Stromstoßrelais
- 61: Steuermittel
- 62: Zeitverzögerungsglied
- 63: Steuermittel
- 64: Steuermittel
- 65: Lampe
- 66: Sendeteil
- 67: Sendeteil
- 68: Empfangsteil
- 69: Empfangsteil
- 70: Niedervoltschalter
- 71: Niedervoltschalter
- 72: Mikro-Schalter
- 73: Wippe
- 74: bewegliches Teil
- 75: Kontakt
- 76: Leiterbahnen
- 77: Transformator
- 78: Potentialausgleichsschiene

## Patentansprüche

1. Bussystem, insbesondere zur elektrischen Hausinstallation, mit Busteilnehmern (1, 2, 3, 4, 5, 14, 15) die Steuermittel (9, 11) mit einem Sender und/oder einem Empfänger umfassen, dadurch gekennzeichnet, daß zwei oder mehrere Busteilnehmer (1, 2, 3, 14) zeitgleich ohne Prioritätszuweisung zugriffsberechtigt sind.

2. Bussystem nach Anspruch 1, dadurch gekennzeichnet, daß keine automatische Korrektur- und/oder Wiederholroutine beim Auftreten von Übertragungsfehlern durch gleichzeitigen Zugriff zweier oder mehrerer Busteilnehmer (1, 2, 3, 14) vorgesehen ist.

3. Bussystem nach Anspruch 1 oder 2, dadurch gekennzeichnet, daß nur die Übertragung von Adressen über den Bus vorgesehen ist.

4. Bussystem nach einem der vorgenannten Ansprüche, dadurch gekennzeichnet, daß die Übertragung von Adressen und von Befehlen vorgesehen ist.

5. Bussystem nach einem der vorgenannten Ansprüche, dadurch gekennzeichnet, daß jeder Busteilnehmer entweder Steuermittel (9) zum Senden oder Steuermittel (11) zum Empfang umfaßt.

6. Bussystem nach einem der vorgenannten Ansprüche, dadurch gekennzeichnet, daß die Steuermittel (9, 11) in handelsübliche Wanddosen (42), Deckendosen und/oder in herkömmliche Lampenfassungen integrierbar sind.

7. Bussystem nach einem der vorgenannten Ansprüche, dadurch gekennzeichnet, daß die Steuermittel (9, 11) Mittel (24, 32) zur Energieversorgung über die Phase (P) des Stromnetzes aufweisen.

8. Bussystem nach einem der vorgenannten Ansprüche, dadurch gekennzeichnet, daß ein wenigstens dreiradriges (P, N, B) herkömmliches Kabel als Energie- und Busleitung vorgesehen ist.

9. Bussystem nach einem der vorgenannten Ansprüche, dadurch gekennzeichnet, daß ein wenigstens vieradriges (P, N, B, E) Kabel mit einem zusätzlichen Schutzleiter (E) vorgesehen ist.

10. Bussystem nach einem der vorgenannten Ansprüche, dadurch gekennzeichnet, daß der Nulleiter (N) zur Stromführung von Energie- und Busleitung vorgesehen ist.

11. Bussystem nach einem vorgenannten Ansprüche, dadurch gekennzeichnet, daß ein niederohmiger Widerstand RN/E zwischen den Leitung des Nulleiters und der Schutzerde geschaltet ist.

12. Bussystem nach einem der vorgenannten Ansprüche, dadurch gekennzeichnet, daß die Steuermittel (9, 11) Mittel zur variablen Adressierung (27, 29, 37) umfassen.

13. Bussystem nach einem der vorgenannten Ansprüche, dadurch gekennzeichnet, daß die Busleitung (B) im Ruhezustand spannungs- und stromlos ist.

14. Bussystem nach einem der vorgenannten Ansprüche, dadurch gekennzeichnet, daß die Steuermittel (9, 11) über nur zwei Anschlußleitungen (19, 20) an einen herkömmlichen Sensor bzw. Aktor anschließbar sind.

15. Bussystem nach einem der vorgenannten Ansprüche, dadurch gekennzeichnet, daß die Steuermittel (9, 11) der Teilnehmer (1, 2, 3, 4, 5, 14, 15) keine eigene Ablaufsteuerung umfassen.

16. Bussystem nach einem der vorgenannten Ansprüche, dadurch gekennzeichnet, daß ein Schalter bzw. Sensor wenigstens teilweise in das Steuermittel integriert ist.

17. Bussystem nach einem der vorgenannten Ansprüche, dadurch gekennzeichnet, daß die Leiterplatte (41) des Steuermittels als Teil des integrierten Schalters bzw. Sensors ausgebildet ist.

18. Bussystem nach einem der vorgenannten Ansprüche, dadurch gekennzeichnet, daß die Steuermittel eines Senders so ausgebildet sind, daß der zeitliche Beginn eines gesendeten Datentelegramms zu einem späteren Zeitpunkt erfolgt, als der Zeitpunkt der Betätigung des Schalter bzw. des Sensors.

19. Bussystem nach einem der vorgenannten Ansprüche, dadurch gekennzeichnet, daß die Sendedauer des gesendeten Datentelegramms unabhängig von der Haltezeit des Schalters bzw. Sensors ist.

20. Bussystem nach einem der vorgenannten Ansprüche, dadurch gekennzeichnet, daß die Sender verschiedener, bestimmter Busteilnehmer so ausgebildet sind, daß Datentelegramme mit variabler Wiederholrate von Blöcken aus Adressen oder aus Adressen und Befehlen ausgesandt werden können.

21. Bussystem nach einem der vorgenannten Ansprüche, dadurch gekennzeichnet, daß alle Busteilnehmer (1, 2, 3, 4, 5, 14, 15) parallel an die Energie- und Busleitung angeschlossen sind.

22. Bussystem nach einem der vorgenannten Ansprüche, dadurch gekennzeichnet, daß an zwei oder mehreren Steuermitteln (9) zum Senden und/oder zwei oder mehreren Steuermitteln (11) zum Empfang die gleiche Adresse einstellbar ist.

23. Bussystem nach einem der vorgenannten Ansprüche, dadurch gekennzeichnet, daß die Steuermittel (11) einen Zähler (30) umfassen.

24. Bussystem nach einem der vorgenannten Ansprüche, dadurch gekennzeichnet, daß die Steuermittel (9) zum Senden einer Adresse periodisch senden und die Steuermittel (11) zum Empfang ein Register zum wenigstens doppelten Erfassen einer periodisch gesandten Adresse aufweisen.

25. Bussystem nach einem der vorgenannten Ansprüche, dadurch gekennzeichnet, daß eine Schaltvorrichtung zum Abschalten und Wiedereinschalten des Energienetzes bzw. der Stromversorgung für alle oder eine Mehrzahl von Teilnehmer vorhanden ist.

26. Schalter mit Steuermitteln (9) nach einem der vorgenannten Ansprüche, dadurch gekennzeichnet, daß ein Energiespeicher zum Einschalten eines abgeschalteten Energienetzes bzw. einer Energieversorgung vorgesehen ist.

27. Stecker für ein Bussystem, nach einem der vorgenannten Ansprüche, dadurch gekennzeichnet, daß ein Steckkontakt (48) für die Busleitung (B) vorgesehen ist.

28. Buchse für ein Bussystem nach einem der vorgenannten Ansprüche, dadurch gekennzeichnet, daß ein zusätzlicher Buskontakt (46) vorhanden ist.

29. Steckdose für ein Bussystem nach einem der vorgenannten Ansprüche dadurch gekennzeichnet, daß ein zusätzlicher Buskontakt (46) vorhanden ist.

30. Verlängerungskabel für ein Bussystem nach einem der vorgenannten Ansprüche, dadurch gekennzeichnet, daß eine zusätzliche Busleitung (B) mit entsprechender Buchse (56) bzw. Stecker (47) nach einem der vorgenannten Ansprüche vorhanden ist.

31. Mobiler Schalter für ein Bussystem nach einem der vorgenannten Ansprüche, dadurch gekennzeichnet, daß er Steuermittel (9) zum Senden einer Adresse umfaßt.

32. Mobile Steckdose für ein Bussystem nach einem der vorgenannten Ansprüche, dadurch gekennzeichnet, daß sie Steuermittel (11) zum Empfang einer Adresse umfaßt.

33. Fernbedienung zum Einsatz eines Bussystems nach einem der vorgenannten Ansprüche, dadurch gekennzeichnet, daß das Empfangsteil der drahtlosen Fernbedienung als Busteilnehmer ausgebildet ist.

34. Steuermittel zum Steuern eines Busteilnehmers, dadurch gekennzeichnet, daß sie an ein Bussystem nach einem der vorgenannten Ansprüche angepaßt sind.

35. Hausinstallationskomponente wie elektrisch steuerbare Rolladen oder Markisen, Wind- oder Sonnenwächter, elektrisch steuerbare Heizungsanlagen, Temperaturwächter, Alarmgeber, Zeitgeber oder dergleichen, dadurch gekennzeichnet, daß Steuermittel nach einem der vorgenannten Ansprüche vorhanden sind.
